# EUROPEAN PATENT APPLICATION

(11) **EP 4 585 512 A1**
(43) Date of publication of application: **16.07.2025**
(21) Application number: 24151908.1
(22) Date of filing: 15.01.2024
(51) Int. Cl.: B64D 11/00

(54) **CONNECTING ELEMENT STRUCTURE, CABIN AND A VEHICLE COMPRISING SUCH CABIN**

(71) Applicant: Airbus Operations GmbH, 21129 Hamburg (DE)
(72) Inventor: Petersen, Lauritz, 21129 Hamburg (DE); Müller, Florian, 21129 Hamburg (DE); Benthien, Hermann, 21129 Hamburg (DE); Schneider, Uwe, 21129 Hamburg (DE)

(57) **Abstract**

The present invention provides a connecting element structure (100) for connecting a cabin element (101) to a primary structure (103) of a vehicle, in particular an aircraft, with a connecting element (104) being arranged between the primary structure (103) and the cabin element (101) and having at least one connection interface (110a, b, c, d) for connection to one of the primary structure (103) and the cabin element (101) whereby the connection interface (110a, b, c, d) allows for a connection slidable relative to the primary structure (103) and the cabin element (101), a cabin (300) having a primary structure (103) and at least one cabin element (101), wherein the connection between the cabin element (101) and the primary structure (103) is provided by a connecting element structure (100), a cabin having such a connecting element structure (100) and a vehicle comprising such a cabin.

## Description

The present invention pertains to a connecting element structure, a cabin of a vehicle having a connecting element structure and a vehicle having a cabin.

Although it can be used in many applications, the present invention and the problems underlying it are explained in greater detail in relation to aircrafts. However, the devices described can likewise be used in vehicles in all sectors of the transport industry, e. g. for road vehicles, for rail vehicles or for watercraft.

Vehicles such as in particular aircrafts have a fuselage in general comprising a three-layered configuration. A standard outer layer referred herein as primary structure, an inner customizing layer referred herein as cabin and an integration layer arranged between the standard layer and the customization layer. The integration layer is configured as adaptive layer which on the one hand eliminates tolerances between the standard and customization layer and on the other hand acts as a load distribution device for continuous load distribution of crash loads.

Various configuration of the integration layer such as frame or trusswork configurations are available. These structures may however not always efficiently compensate tolerances between primary structures and elements of the customization layer. Furthermore the integration layer needs to be adapted to the elements of the customization layer depending on the elements to be connected thereto. Standardization and fast adaption of the integration layer may hence be difficult to achieve and require longer processing times and the associated costs.

Against this background, it is an object of the present invention to find a configuration that enables fast and efficient attachment of the elements of the customization layer to the primary structure and providing an integration layer enabling efficient tolerance compensation due to minimum distances between the primary structure and the elements of the customization layer.

This object is achieved by a connecting element structure having the features of claim 1 and a cabin having the features of claim 12 integrated in a vehicle according to claim 14.

According to a first aspect of the invention, a connecting element structure for connecting a cabin element to a primary structure of a vehicle, is provided. The connecting element structure comprises a connecting element being arranged between the primary structure and the cabin element and has at least one connection interface for connection to one of the primary structure and the cabin element. The connection interface thereby allows for an integration wherein the connecting element is slidable relative to the primary structure and the cabin element. The connecting element structure provides an integration layer enabling efficient tolerance compensation due to minimum distances between the primary structure and the cabin elements and allows for fast adaptation of the integration layer to the various configurations of the cabin elements connected thereto.

A further aspect of the invention lies in a cabin, in particular an aircraft cabin, having a primary structure and at least one cabin element, wherein the connection between the cabin element and the primary structure is provided by a connecting element structure comprises a connecting element arranged between the primary structure and the cabin element and has at least one connection interface for connection to one of the primary structure and the cabin element and wherein the connection interface allows for an integration with the connecting element being slidable relative to the primary structure and the cabin element.

A further aspect of the invention lies in vehicle, comprising a fuselage having a fuselage structure and such cabin arranged therein.

Advantageous embodiments and further developments are apparent from the further dependent claims and from the description with reference to the figures.

According to another aspect of the invention, the connecting element has at least two legs, aligned at an angle to one another. The connection interfaces are provided at least at one of the ends of the legs and/or the apex of the legs. This provides the advantage that the connecting element provides an integration layer having a minimum distance to the primary structure of the vehicle and the cabin element attached thereto. Consequently, an efficient tolerance compensation is ensured due to the minimum distances between the elements of primary layer and customization layer. Furthermore, the connecting element structure allows for fast an efficient adaption of the integration layer to various configurations of the cabin element by using a standardized connecting element having embodiments as described below.

According to an embodiment of the connecting element structure, the connecting element is designed as an angled rail or tube extending parallel to the primary structure and or the cabin element and having a first and second leg. The first leg extends between the primary structure and the cabin element whereas the second leg extends parallel to a side of the cabin element facing the primary structure. This provides an advantage in short distance attachment of the cabin element to the primary structure, adaptation of the structure to the respective elements to be connected and ensures full tolerance compensation in a three-dimensional direction within the thus provided integration layer.

According to a further embodiment of the connecting element structure the connecting element is formed as a triangular plate with the connection interfaces being provided at the tips of the triangular plate.

It is an advantage of both of the embodiments described before that tolerance compensation in a moving direction of a vehicle and orthogonally thereto can be achieved with a short distance attachment of the connection element to the primary structure and cabin element being independent from the configuration of frame structures in the primary structure and the cabin element. The connection element acts as a tensile or compression element and ensures creation of a form fit pressure or tension load introduction into or from the primary structure

According to a further embodiment of the connecting element structure the connection interfaces are designed as one of a double-eccentric bush or a slider, in the embodiment of the connecting interfaces as double-eccentric bush said bush encloses a frame structure provided in the of the primary structure or the cabin element. In an embodiment of the connection interface as slider, said slider interlocks with a sliding interface of the aforesaid frame structure. Both configurations of the connection interface can be realized in the same connecting element in distinct positions thereof. It is an advantage of this embodiment, that the connecting element structure can be provided depending on the requirements set by the primary structure and the cabin element and the intended load introduction.

According to a further embodiment of the connecting element structure each of the primary structure and the cabin element can have a the frame structure configured as one of a stringer or an extrusion rail profile. Whereas the connection interface for interconnecting with the stringer is preferably, but without limiting the invention thereto, configured as a double-eccentric bush enclosing a frame structure of the stringer. The extrusion rail profile preferably provides the sliding interface to connect with the connection interface configured as a slider. This allows for adaption to the requirements of the primary structure and the cabin element and facilitates the construction in particular with respect the quality and direction of load introduction.

In an embodiment wherein the connecting element structure has at least one connection interface being designed as a double-eccentric bush, the connection interface provides a rotary connection, in particular a rubber-based shock absorbing rotary connection. This allows for optimized adaption of load introduction over the interfaces in particular into the primary structure and allows for improved tolerance compensation without the need for providing complex structures in the integration layer thus formed.

According to a further embodiment of the connecting element structure there are provided at least three connection interfaces to connect with either of the primary structure and the cabin element. In a first out of several configurations, two connection interfaces are provided connecting the connection element with the back wall of the cabin element facing the primary structure. The connection interfaces in this embodiment in particular provide an upper sliding connection with the upper edge of the back wall and/or a lower sliding connection with the lower end of the back wall whereas one connection interface is coupled with the primary structure and is in particular configured as a double eccentric bush connection element. In a further configuration a single connection interface is provided for connection with a back wall of the cabin element facing the primary structure. The connection interfaces in this embodiment in particular provide a lower sliding connection with the lower end of the back wall whereas two connection interfaces are provided relative to the first connection interface wherein said connection interfaces are coupled with the primary structure at distinct positions relative to the cabin element and in particular configured as a double eccentric bush connection element. It is considered advantageous in this embodiment, that based on the selection of the respective connection interfaces and positions thereof, the positioning and load introduction can be adapted dependent on the frame structure of either of the primary structure and the cabin element and the configuration of the cabin element as, the load introduction in terms of tensile or pressure load as well as the direction of load introduction.

According to a further embodiment of the connecting element structure the connecting interface is configured to allow for a three-dimensional tolerance compensation between the primary structure and the cabin element.

According to a further embodiment of the connecting element structure the cabin element is configured as one of an overhead stowage compartment, a bin, a hatrack, a passenger service unit or a vehicle floor section. It is an advantage of this embodiment, that the connecting element structure can be adapted to the size and configuration as well as position of the cabin element and to the expected or calculated load introduction by selecting a connection element configuration that fulfills the respective requirements set by the configuration and kind of the cabin element to connect with the primary structure, thereby reducing the distance between the cabin element and the primary structure to a minimum thus allowing for efficient tolerance compensation and an attachment independent of the layout of the cabin element within the integration layer.

According to a further embodiment of the connecting element structure the connection element additionally provides an attachment interface to connect to the passenger service unit arranged relative to a cabin element such as a hatrack or overhead stowage compartment and fixedly secured thereto. It is an advantage of this embodiment, that a statically fully determined support for the passenger service unit can be provided that is in floating connection with the primary structure via the connection element connected to the cabin element.

According to a further embodiment of the cabin, the connecting element structure provides for an at least two-dimensional, preferably three-dimensional tolerance compensation between the primary structure and the cabin element arranged therein. It is an advantage that the connection element allows for fast and efficient adaption of the structure to the respective configuration of the cabin element.

According to a further embodiment of the vehicle, the vehicle is an aircraft.

The invention will be explained in greater detail with reference to exemplary embodiments depicted in the drawings as appended.
- Fig. 1: schematically depicts a view of the connecting element structure according to an embodiment of the invention;
- Fig. 2a: schematically depicts a side view of a connecting element structure according to an embodiment of the invention;
- Fig. 2b: schematically depicts a side view of a connecting element structure according to an embodiment of the invention;
- Fig. 3: schematically depicts a view of the connecting element structure according to another embodiment of the invention;
- Fig. 4: schematically depicts a side view of a connecting element structure according to another embodiment of the invention; and
- Fig. 5: schematically depicts a perspective view of a compartment of a cabin according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

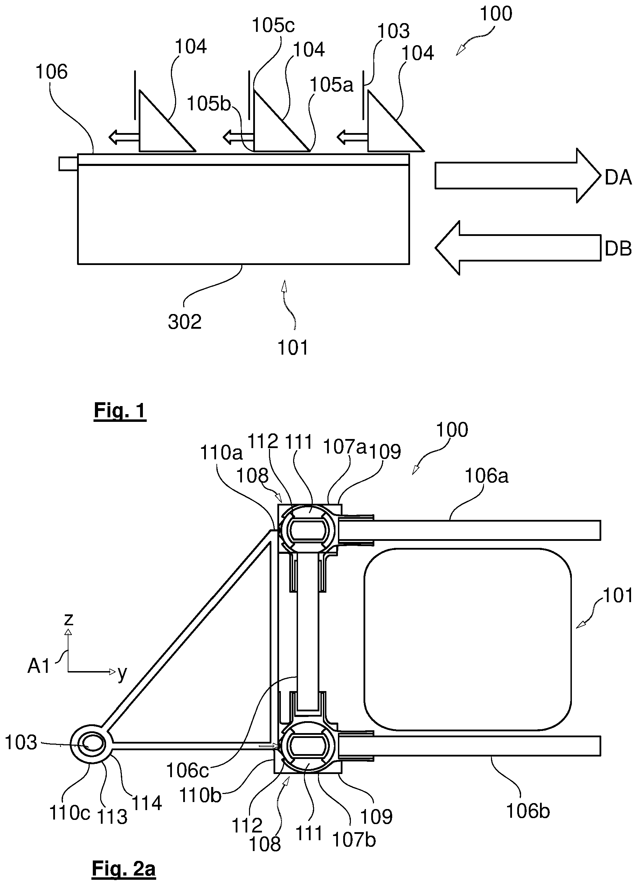

Fig. 1 schematically depicts a schematic view of the connecting element structure 100 in an aircraft. Fig. 1 depicts a cabin element 101, configured as an overhead stowage compartment 302 connected with a primary structure 103 of an aircraft via a plurality of rectangular connecting elements 104 each having two connection points 105a, 105b at the rear wall 116 facing the primary structure 103 and one connection point 105c with the primary structure 103, hence the aircraft primary layer (not shown). The connecting elements 104 is configured as a tensile or compression element and provides for a short distance to the primary structure 103. The connecting elements 104 is in sliding connection with the cabin element 101 on the one hand and the primary structure 103 on the other. The connecting elements 104 is thus able to ensure tolerance compensation of movement of the cabin element 101 relative to the primary structure 103 irrespective of movement of the entire structure in a first direction DA or a second direction DB.

Fig. 2a schematically depicts a side view of a connecting element structure 100 according to an embodiment of the invention. The cabin element 101 of Fig. 2a consists of at least three honeycomb plates 106a, b, c connected via extrusion profiles 107a, b enclosing the adjacent edge portions 108 of the honeycomb plates 106a, b, c. The extrusion profiles 107a, b provide connection means 109 to interlock with the connection interfaces 110a, b provided at the connecting element 104. The side of the connecting element 104 facing away from the cabin element 101 is connected on to the primary structure 103 via a further connecting interface 110c. The connection interfaces 110a, b connected to the cabin element 101 are in sliding connection with the extrusion profiles 107a, b and a sliding interface 111 provided therein. The connection interfaces 110a, b to connect to the extrusion profiles 107a, b, are configured as sliders 112 to mate with a respective slot or rail provided in the extrusion profiles 107a, b to thus allow for the sliding connection between the cabin element 101 and the connection element 104. Triangular plates can be provided as connecting elements 104, which are arranged on the cabin element 101 at a distance from each other and/or extending over the entire length of the cabin element 101. Alternatively, the connecting element 104 can be designed as a rail that extends parallel to the longitudinal direction of the cabin element 101 on the one hand and the primary structure 103 on the other. The portion of the connecting elements 104 connected to the primary structure 103 is equipped with a connection interface 110c configured as a double eccentric bush 113 having a rubber-based shock absorbing element 114 included in the bush 113. The connection interfaces 110c connects the connection element 104 to the primary structure 103 via a rotary connection and allows for tolerance compensation in two dimensions as indicated by arrow A1. The embodiment as shown provides for sliding connection of the cabin element 101 and hence enables an efficient three-dimensional tolerance compensation by short distances between the connected elements.

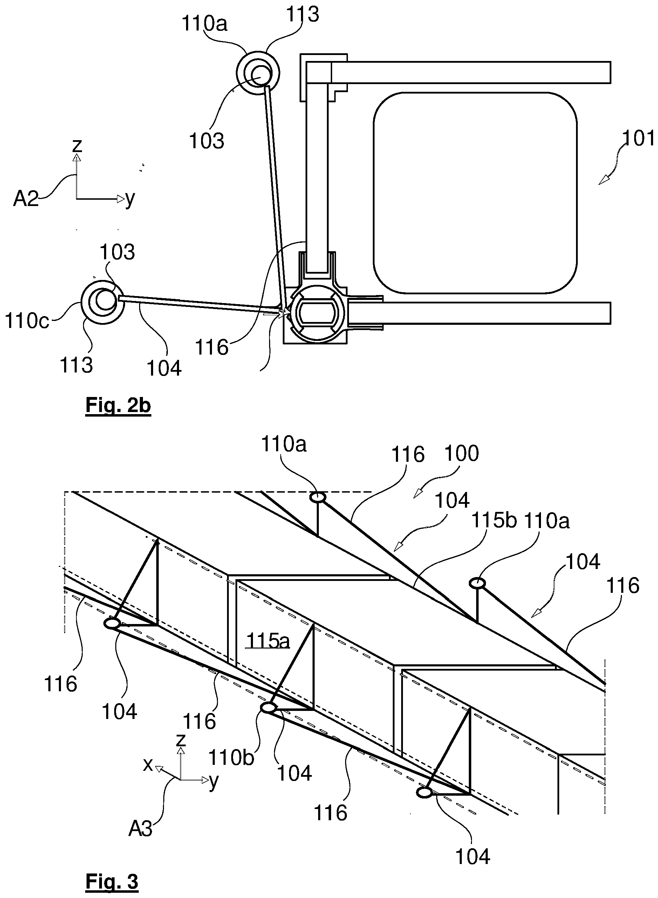

Fig. 2b schematically depicts a side view of a connecting element structure 100 according to another embodiment of the invention. As shown, the connection element 104 provides two connection interfaces 110a, c connected to the primary structure 103 by means of double eccentric bushes 113 and one connection interfaces 110b connected to the cabin element 101 providing a sliding connection with the connection element 104. In Fig. 2b, the connection element 104 is configured as a rail extending parallel to the rear wall 116 of the cabin element 101 facing the primary structure 103. Fig. 2b depicts a configuration the invention connection element structure 100 with two sliding connections of the connection element 104 to the primary structure 103 and one to the cabin element 101 resulting in an efficient tolerance compensation in the directs indicated by arrow A2.

Fig. 3 schematically depicts a view of the connecting element structure 100 according to another embodiment of the invention. The connecting element structure 100 has several connecting elements 104, which are arranged in both surfaces 115a, b of the cabin element 101, i.e. the surface 115b facing the primary structure 103 and the surface 115a opposite thereof. In the embodiment the connecting elements 104 are connected to each other by means of rods 116 connected to the upper and lower connection interfaces 110a, b, c respectively of each connection element 104 thus providing an interconnection between the connection elements 104. The connecting element structure 100 provides for overlapping connections of the connection elements 104 with respect to the primary structure 103 and the cabin elements 101 and enables a three-dimensional tolerance compensation in directions as indicated by arrow A3. The tolerance compensation is independent of the primary structure 103 and highly efficient due to the sliding connections provided by the connection interfaces 110a, b, c, d connected to the primary structure 103 or the cabin elements 101.

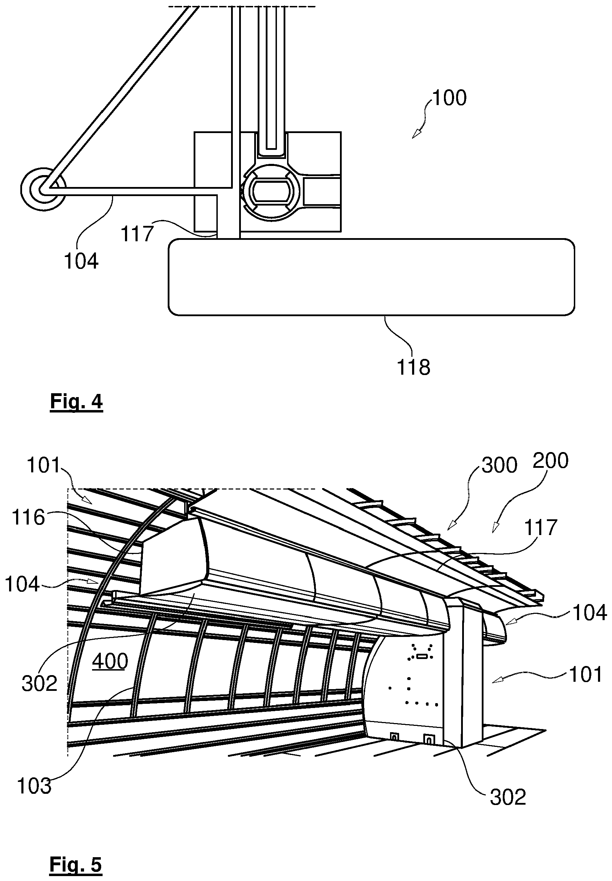

Fig. 4 depicts a side view of a connecting element structure 100 according to another embodiment of the invention. The connecting element structure 100 in general corresponds to that described in connection with Fig. 2a. In addition thereto the connection element 104 additionally provides an attachment interface 117 to fixedly secure a flat element 118, such as a passenger service unit arranged below the cabin element 101, such as a hatrack or overhead stowage compartment 301 secured thereto. The attachment interface 117 allows for a statically fully determined support for the flat element 115 that is in floating connection with the primary structure 103 via the connection element 104 connected to the cabin element 101.

Fig. 5 depicts a perspective view of a compartment 200 of a cabin 300 according to an embodiment of the invention. A plurality of cabin elements 101 such as overhead stowing compartments 301 and bin 302 are arranged in the cabin 300 and interconnected to the primary structure 105 of an aircraft fuselage 400 via connection element structures 100 as described above. Connection elements 104 are arranged on a rear wall 116 of the cabin elements 101 as well as on the upper front edge 117 thereof. Due to the respective configurations of the connection interfaces 110 a, b, c of the connection elements 104 as described before the cabin elements 101 are in sliding connection with the primary structure 103 whereas the invention configuration of the connection elements 104 and the connection element structure 100 provides for an efficient tolerance compensation between the primary structure 103 and the cabin elements 101 and flexible adaptation to various embodiments of cabin elements 101.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: connecting element structure
- 101: cabin element
- 102: overhead stowage compartment
- 103: primary structure
- 104: connecting element
- 105a, b, c: connection point
- 106a, b, c: honeycomb plates
- 107a, b: extrusion profile
- 108: edge portion
- 109: connection means
- 110a, b, c, d: connection interface
- 111: sliding interface
- 112: slider
- 113: bush
- 114: shock absorbing element
- 115a, b: surface
- 116: rod
- 117: attachment interface
- 115: flat element
- 116: rear wall
- 117: front edge
- 200: compartment
- 300: cabin
- 301: overhead stowage compartment
- 302: bin
- 400: fuselage
- A1, 2, 3: arrow
- DA, DB: direction

## Claims

1. A connecting element structure (100) for connecting a cabin element (101) to a primary structure (103) of a vehicle, in particular an aircraft, with a connecting element (104) being arranged between the primary structure (103) and the cabin element (101) and having at least one connection interface (110a, b, c, d) for connection to one of the primary structure (103) and the cabin element (101) whereby the connection interface (110a, b, c, d) allows for a connection slidable relative to the primary structure (103) and the cabin element (101).

2. The connecting element structure (100) according to claim 1, wherein the connecting element (104) has at least two legs, aligned at an angle to one another and wherein the connection interfaces (110a, b, c, d) are provided at least at one of the ends of the legs and the apex of the legs.

3. The connecting element structure (100) according to claim 1 or 2, wherein the connecting element (104) is designed as an angled rail or tubes extending parallel to the primary structure (103) or the cabin element (101) with the first leg extending between the primary structure (103) and the cabin element (101) and the second leg extending parallel to a rear wall (116) of the cabin element (101) facing the primary structure (103).

4. The connecting element structure (100) according to claim 1 or 2, wherein the connecting element (104) is formed as a triangular plate with the connection interfaces (110a, b, c, d) being provided at the tips of the triangular plate.

5. The connecting element structure (100) according to any of claims 1 to 4, wherein the connection interfaces (110a, b, c, d) are designed as one of a double-eccentric bush (113) or a slider (112), wherein said double-eccentric bush (113) encloses a frame structure of the primary structure (103) or the cabin element (101) or said slider (112) interlocks with a sliding interface (111) of the frame structure.

6. The connecting element structure (100) according to any of the claims 1 to 5, wherein the frame structure is configured as one of a stringer or an extrusion rail profile, with the extrusion rail profile preferably providing the sliding interface (111).

7. The connecting element structure (100) according to claim 5 or 6, wherein with the connection interface (110a, b, c, d) being designed as a double-eccentric bush (113) the connection interface (110a, b, c, d) provides a rotary connection, in particular a rubber-based shock absorbing rotary connection.

8. The connecting element structure (100) according to any of claims 1 to 7, wherein least three connection interfaces (110a, b, c, d) are provided to connect with either of the primary structure (103) and the cabin element (101).

9. The connecting element structure according to any of claims 1 to 8, wherein the connection interface (110a, b, c, d) is configured to allow for a three-dimensional tolerance compensation between the primary structure (103) and the cabin element (101).

10. The connecting element structure (100) according to any of claims 1 to 9, wherein the cabin element (101) is configured as one of an overhead stowage compartment (301), a bin (302), a hatrack, a passenger service unit, or a vehicle floor section.

11. The connecting element structure (100) according to claim 10, wherein the connecting element (104) additionally provides an attachment interface (117) to connect to the passenger service unit.

12. A cabin (300), in particular aircraft cabin, having a primary structure (103) and at least one cabin element (101), wherein the connection between the cabin element (101) and the primary structure (103) is provided by a connecting element structure (100) according to any of claims 1 to 11.

13. The cabin (300) according to claim 12, wherein the connecting element structure (100) provides for an at least two-dimensional, preferably three-dimensional tolerance compensation between the primary structure (103) and the cabin element (101).

14. Vehicle, comprising a fuselage (400) having a fuselage structure and a cabin (300) of any of the claims 12 to 13 integrated inside the fuselage structure.

15. Vehicle according to claim 14, wherein the vehicle is an aircraft.
